# EUROPEAN PATENT APPLICATION

(11) **EP 1 288 776 A2**
(43) Date of publication of application: **05.03.2003**
(21) Application number: 02254826.7
(22) Date of filing: 09.07.2002
(51) Int. Cl.: G06F 3/12

(54) **Versatile printing from portable electronic device**

(30) Priority: 26.07.2001 US 917016
(71) Applicant: Hewlett-Packard Company, Palo Alto, CA 94304 (US)
(72) Inventor: Udom, Charlie, Corvallis, OR 97330 (US); Atwood, John, Corvallis, OR 97333 (US); Taylor, Keith M., Corvallis, OR 97330 (US); Brown, William P., Portland, OR 97211 (US)
(74) Representative: Jackson, Richard Eric

(57) **Abstract**

Printing is performed from a portable device (100). Upon a selection to print, available printing options (121) are displayed. This includes providing an option to print remote data accessible at a location outside of the portable device (100) by reference to the location outside of the portable device (100). Upon selection of one of the available printing options (121), a print operation is performed in accordance with the selection.

## Description

### CROSS REFERENCE TO RELATED APPLICATIONS

This application is related to co-pending United States patent application entitled "FULL INFORMATION SET DELIVERY" filed on October 3, 2000 and accorded serial number 09/678,648, and to co-pending United States patent application entitled "SYSTEM AND METHOD FOR CREATING AND PRINTING A CREATIVE EXPRESSION" filed on March 13, 2000 and accorded serial number 09/524,669.

### BACKGROUND OF THE INVENTION

The present invention pertains to printing from a computing device and pertains particularly to versatile printing from a portable electronic device.

Portable devices that link users to communication services are popular and widespread. Personal digital assistants (PDAs) are now full capability computing devices. Cellular phones have increasing functionality built in.

One of the reasons for the increasing versatility of portable devices is the ability to interact with the internet and other networks. For example, wireless links allow portable devices to be conveniently and instantaneously connected to the Internet. Through the internet the portable devices can access a wealth of information.

The World Wide Web (Web) allows users to navigate Internet resources intuitively, without using internet protocol (IP) addresses or other special technical knowledge. The Web is made up of interconnected "web pages", or web documents. These pages are accessed with the use of a web "browser".

The Web uses a transfer method known as "HTTP" (Hypertext Transfer Protocol). One format for information transfer is to create documents using Hypertext Markup Language (HTML). HTML pages are made up of standard text as well as formatting codes that indicate how the page should be displayed. A browser reads these codes in order to display the page.

Each Web page may contain graphics, video and audio information in addition to text. Hidden behind certain text, pictures or sounds are connections, known as "hypertext links" ("links"), to other pages within the same server or on other computers within the Internet. Each link is directed to a web page by a Uniform Resource Locator (URL). A user may also specify a known URL by writing it directly into the command line of a web browser.

A web user can download a web page from a server on the World Wide Web and then print the web page. However, when using a portable device, limited storage space can hinder the ability to efficiently print rich content.

For example, existing PDAs generally allow printing from the PDA to a printer via an infrared (IR) link. The print driver on a typical PDA exists as a separate non-integrated application that will print documents residing on the PDA. The richness, as well as the number, of large-sized documents that can be printed from the PDA is limited by the relatively low storage capacity of PDAs. In addition, delivery of very large-sized documents to PDAs (especially through a wireless connection) is slow and thus not very practical.

### SUMMARY OF THE INVENTION

In accordance with the preferred embodiment of the present invention, printing is performed from a portable device. Upon a selection to print, available printing options are displayed. This includes providing an option to print remote data accessible at a location outside of the portable device by reference to the location outside of the portable device. Upon selection of one of the available printing options, a print operation is performed in accordance with the selection.

### BRIEF DESCRIPTION OF THE DRAWINGS

Figure 1 is a block diagram illustrating versatile printing options from a portable device in accordance with a preferred embodiment of the present invention.
Figure 2 is a flowchart that illustrates implementation of versatile printing from a portable device in accordance with a preferred embodiment of the present invention.
Figure 3 shows a display of print options in accordance with a preferred embodiment of the present invention.
Figure 4 shows a display of templates in accordance with a preferred embodiment of the present invention.
Figure 5 shows a display of print options with a highlighted user selection in accordance with a preferred embodiment of the present invention.

### DETAILED DESCRIPTION OF A PREFERRED EMBODIMENT

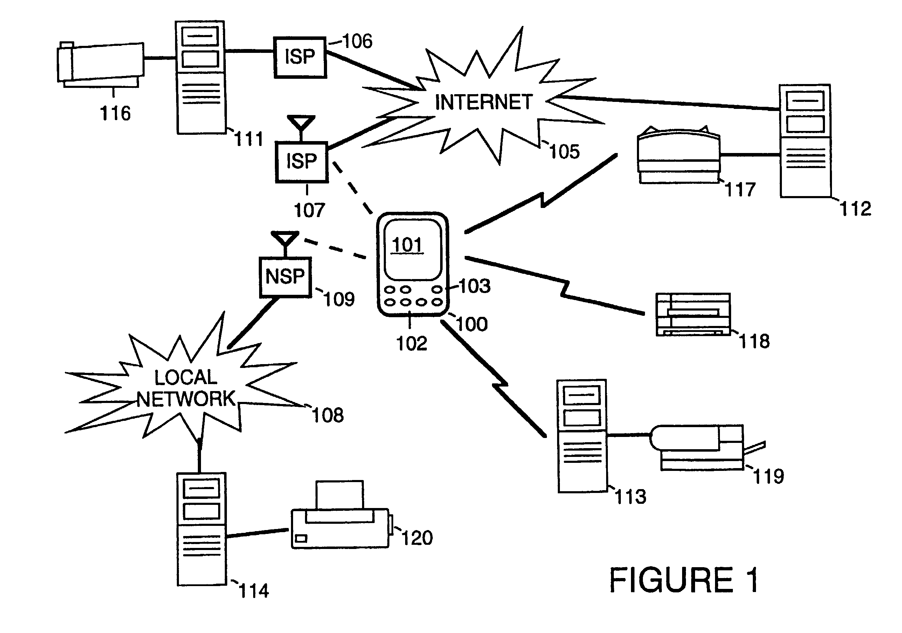

Figure 1 is a block diagram illustrating print options available to a portable device 100. For example, portable device 100 is a personal digital assistant (PDA). Alternatively, portable device 100 can be a cellular phone, a pager, or any other type of handheld portable device.

Portable device 100 includes keys 102 and a display 101. A mobile print button 103 allows a user to access versatile printing options that allow any time and anywhere printing of rich content. While in the preferred embodiment print button 103 is used to make a print selection, other means for making a print selection (for example by selection of a print icon shown on display 101) can also be used. The rich content includes, for example, web pages with embedded content such as embedded ads, coupons, and so on. The printing is supplied in a single integrated solution. This print options allow a seamless printing solution for printing rich content from portable devices.

For example, portable device 100 can print directly to a printer 118 through an infrared (IR) interface.

Portable device 100 can print using a printer 119 by uploading data through computing system 113. The data uploaded to computing system can include data to be directly printed on printer 119, and can include one or more references to content rich data residing on computing system 113 or accessible to computing system 113. For example, a user of portable device 100 can select an option to print content rich data upon synchronization with computing system 113. During the course of synchronization with computing system 113, data to be printed, along with any references to content rich data residing on computing system 113 or accessible to computing system 113 is uploaded to computing system 113 and printed on printer 119.

Portable device 100 can print using a printer 117 by transferring print data directly to printer 117. The data transferred to printer 117 can include data to be directly printed on printer 117, and can include one or more references to content rich data residing on or accessible to a computing system 112. Any references to content rich data sent to printer 117 is passed on to computing system 112. Computing system 112 accesses the referenced content rich data and forwards the data back to printer 117 for printing.

Portable device 100 can print using a printer 116 by transferring print data to printer 117 through the internet 105. For example, portable device 100 makes wireless connection with internet 105 via an internet service provider (ISP) 107. A server 106 is connected to internet 105 via an ISP 106. The data transferred to server 111 for printing on printer 116 can include data to be directly printed on printer 116, and can include one or more references to content rich data residing on or accessible to server 111. Server 111 accesses the referenced content rich data and forwards the accessed data to printer 116 for printing.

Portable device 100 can print using a printer 120 by transferring print data to printer 120 through a local network 108. For example, portable device 100 makes wireless connection with local network 108 via a network service provider (NSP) 109. A server 114 is connected on local network 108. The data transferred to server 114 for printing on printer 116 can include data to be directly printed on printer 120, and can include one or more references to content rich data residing on or accessible to server 114. Server 114 accesses the referenced content rich data and forwards the accessed data to printer 120 for printing.

Printers 116-120 can be located within the physical vicinity of portable device 100 or can be in a remote location, even in a different country, from portable device 100. For example any of printers 116-120 could be within a kiosk within an airport, or in the office of the user or a client of the user. Printers 116 through 120 can be, for example, ink jet printers, laser printers, all-in-one office equipment with print capability, and so on.

In the preferred embodiment, use of print button 103 allows a seamless integration of all these (as well as future) printing models that can be applied to any content delivered to or accessible by portable device 100. This content includes a full range of range printable material such as company financial reports for a mobile executive, glossy, hi-resolution prints of celebrities complete with ads and clippable coupons, and so on.

In the preferred embodiment, various printing technologies are combined into one module that reside on portable device 100 and is accessible to a browser running on portable device 100. For example, if portable device 100 is a Pocket PC, available from Hewlett-Packard Company, the module is implemented as an ActiveX Control for Pocket Internet Explorer. If portable device 100 is a non-wireless Palm available from Palm, Inc., the module is implemented as a pod for the AvantGo browser. If portable device 100 is a wireless palm (such as a Palm VII) available from Palm, Inc., the module is implemented as be ".prc" application for the Web Clipper browser.

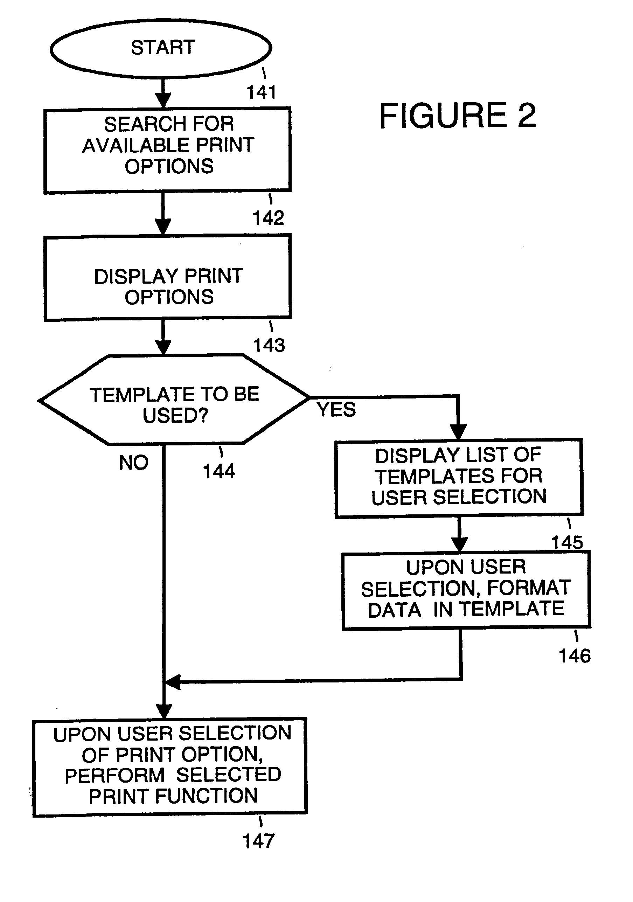

Figure 2 is a flowchart that illustrates operation of the print module upon selection of print button 103. In a step 141, print button 103 is pressed. In a step 142, portable device 100 searches for available printing options. In the preferred embodiment, only the print options that the user selected during installation are presented. The module within portable device 100 determines which print options to display by detecting whether or not certain sub-components are installed.

In a step 143, the print options are displayed to the user via a dialog box displayed on display 101 of portable device 100. If the user only installed components for a single print option, step 143 will be bypassed and the print action will be immediately invoked upon a user selecting print button 103.

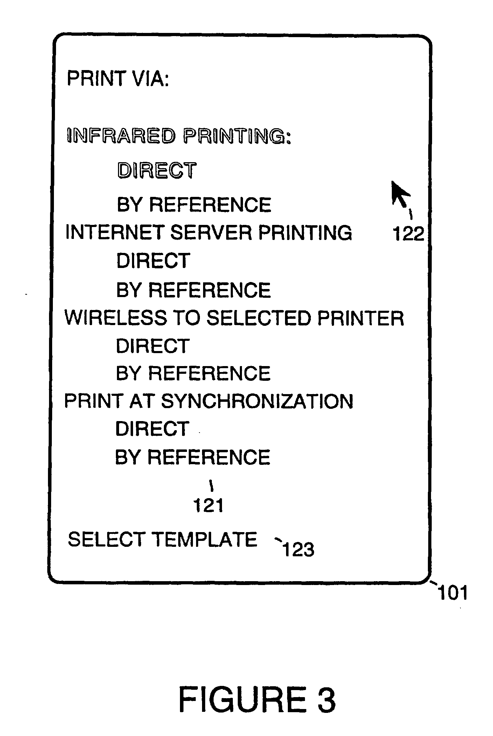

Figure 3 shows an example display resulting from step 143. In the example, print options are displayed in an area 121 of display 101. The displayed options include infrared printing, internet server printing, wireless to selected printer or print at synchronization.

Infrared printing is performed to a printer in close vicinity to portable device 100. Internet server printing is performed to a printer over the internet using an internet service provider. Wireless printing is performed using a wireless connection to a printer. Print at synchronization stores the print job until portable device 100 is synchronized with a computing system. The print job is then uploaded to the computing system for printing.

Each of the options listed in area 121 has two sub-options. The direct printing sub-option indicates that print data is printed directly on the printer. The print by reference sub-options means that one or more references to remote data not stored on portable device 100 are used to access content rich data from a source outside portable device 100. In an alternative embodiment, portable device 100 can select the sub-option automatically depending upon whether a reference to content rich data from a source outside portable device 100 is available for the information to be printed.

The user makes a choice based on which printing solution best fits the situation. The choice can depend, for example, on the capability of portable device 100, the capability of the output device used for printing, the availability of various output devices, the availability of a wireless service, and so on.

In an area 123 of display 101, a template option is shown. A user can make selections, for example, using a cursor 122. In a step 144 (shown in Figure 2), portable device 100 detects if a user selects the template option. If so, in a step 145, a list of available templates is displayed by display 101.

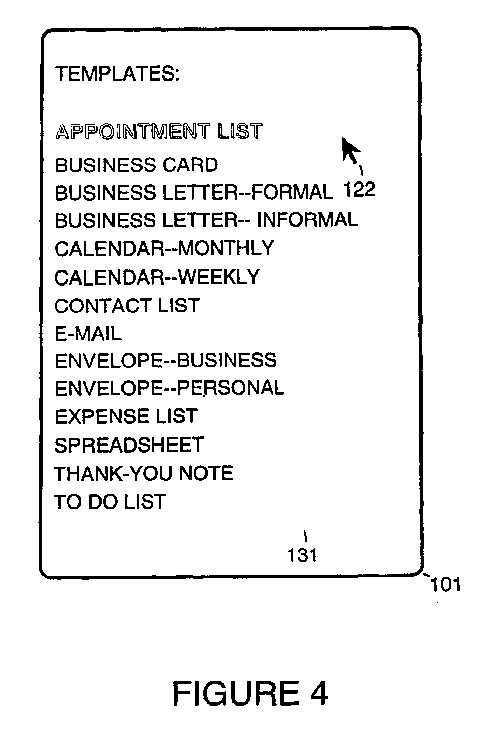

Figure 4 shows an example list of templates displayed in an area 131 of display 101. Each template, presents a high-impact graphic and/or pre-defined layout residing on portable device 100. Information such as contacts, appointments, notes, task lists, and so on can be printed using the templates with the resulting output being much higher in presentation-quality than with simple formatting.

In area 131 just the list of available templates is displayed. Corresponding pictures or descriptions can be accessed for each template by making a special selection of the template. Alternatively, thumbnails of the templates can be displayed in area 131 provided the graphics capability of display 101 is sufficiently powerful.

The user selects the desired template to apply to the information to be printed. For example, if the user wishes to print out a "business card," the user selects the business card template. In one embodiment, if there are more than one business card options, selection of "business card" in area 131 will result in a list of all available business card templates. Alternatively, all business card templates can be directly displayed in area 131. For example the business card template has a company logo and design layout for the user of portable device 100.

For example, if the user has a report stored as a note on portable device 100 and wishes to print out a copy to submit to an employer, the user can select a template with the company letterhead at the top and the user's signature information at the bottom. The listed templates are customizable. In addition, the user can upload templates to portable device 100 as well as remove installed templates in order to manage available memory space.

In a step 146 (shown in Figure 2), upon a user selection, print data is formatted in a template.

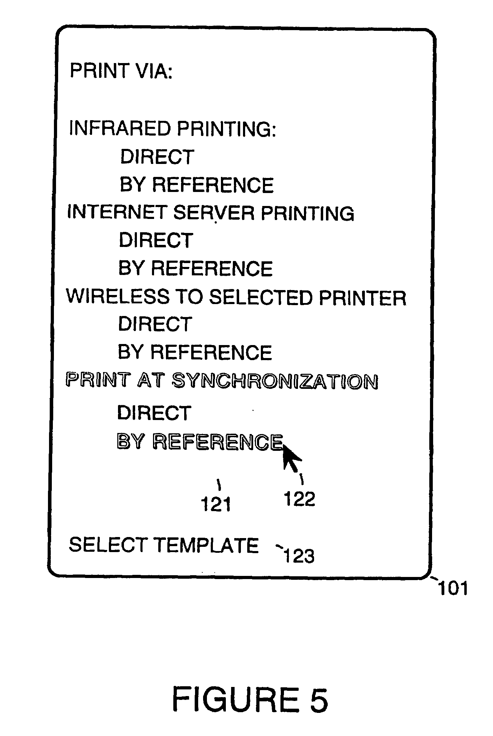

In a step 147, once a user has selected a print option from area 121 of display 101 (as shown in Figure 5), the selected print function is performed. For example, in Figure 5, it is shown that a user has selected to print by reference at synchronization.

An example of printing by reference is when a user uses portable device 100 to access a web page. Because of the limited resources available on portable device 100, a browser within portable device accesses only a truncated version of the web page. When the user determines to print the web page by reference, a web address for the web page is sent, for example, to a printer or to a computing system connected with the printer. The web address is in the form of a universal resource locator (URL). The computing system uses the web address to access the full version of the web page and oversees printing of the full web page on the printer.

The foregoing discussion discloses and describes merely exemplary methods and embodiments of the present invention. As will be understood by those familiar with the art, the invention may be embodied in other specific forms without departing from the spirit or essential characteristics thereof. Accordingly, the disclosure of the present invention is intended to be illustrative, but not limiting, of the scope of the invention, which is set forth in the following claims.

## Claims

1. A method for printing from a portable device (100), comprising the following steps:
(a) upon a selection to print, displaying available printing options (121), including the following substep:
(a.1) providing an option to print remote data accessible at a location outside of the portable device (100) by reference to the location outside of the portable device (100); and,
(b) upon selection of one of the available printing options (121), performing a print operation in accordance with the selection.

2. A method as in claim 1 wherein the portable device (100) is a personal digital assistant.

3. A method as in claim 1, wherein step (a) additionally comprises the following substep:
(a.2) providing an option (123) to use a template to provide standardized formatting to data to be printed.

4. A method as in claim 1, wherein step (a) additionally comprises the following substeps:
(a.2) providing an option (123) to use a template to provide standardized formatting to data to be printed; and,
(a.3) upon selection of the option (123) to use a template to provide standardized formatting to data to be printed, displaying a list of available templates (131);
wherein, upon selection of one from the list of available templates (131), the selected template is used in step (b) in performance of the print operation.

5. A method as in claim 1, wherein step (a) additionally comprises the following substep:
(a.2) providing an option to print when the portable device (100) is synchronized with a computing system (113).

6. A method as in claim 1, wherein step (a) additionally comprises the following substep:
(a.2) providing an option to print by using an internet service provider (107) to send data to be printed to a printer (116).

7. A method as in claim 1, wherein step (a) additionally comprises the following substep:
(a.2) providing an option to print the remote data by using an internet service provider (107) to send the reference to the location outside the portable device (100) to a computing system (111) connected to a printer (116).

8. A method for printing from a portable device (100), comprising the following steps:
(a) upon a selection to print, displaying available printing options (121), including the following substep:
(a.1) providing an option (123) to use a template to provide standardized formatting to data to be printed; and,
(b) upon selection of one of the available printing options (121), performing a print operation in accordance with the selection.

9. A method as in claim 8 wherein the portable device (100) is a personal digital assistant.

10. A method as in claim 8, wherein step (a) additionally comprises the following substep:
(a.2) upon selection of the option (123) to use a template to provide standardized formatting to data to be printed, displaying a list of available templates (131);
wherein, upon selection of one from the list of available templates (131), the selected template is used in step (b) in performance of the print operation.

11. A method as in claim 8, wherein step (a) additionally comprises the following substep:
(a.2) providing an option to print when the portable device (100) is synchronized with a computing system (113).

12. A method for printing from a portable device (100), comprising the following steps:
(a) upon a selection to print, displaying available printing options (121), including the following substep:
(a.1) providing an option to print when the portable device (100) is synchronized with a computing system (113); and,
(b) upon selection of one of the available printing options (121), performing a print operation in accordance with the selection.

13. Storage media for storing software, the software, when executed on a portable device (100) performing a method for printing, the method comprising the following steps:
(a) upon a selection to print, displaying available printing options (121), including the following substep:
(a.1) providing an option to print remote data accessible at a location outside of the portable device (100) by reference to the location outside of the portable device (100); and,
(b) upon selection of one of the available printing options (121), performing a print operation in accordance with the selection.

14. Storage media as in claim 13, wherein step (a) additionally comprises the following substep:
(a.2) providing an option (123) to use a template to provide standardized 5 formatting to data to be printed.

15. Storage media as in claim 13, wherein step (a) additionally comprises the following substeps:
(a.2) providing an option (123) to use a template to provide standardized formatting to data to be printed; and,
(a.3) upon selection of the option (123) to use a template to provide standardized formatting to data to be printed, displaying a list of available templates (131);
wherein, upon selection of one from the list of available templates (131), the selected template is used in step (b) in performance of the print operation.

16. Storage media as in claim 13, wherein step (a) additionally comprises the following substep:
(a.2) providing an option to print when the portable device (100) is synchronized with a computing system (113).

17. Storage media as in claim 13, wherein step (a) additionally comprises the following substep:
(a.2) providing an option to print by using an internet service provider (107) to send data to be printed to a printer (116).

18. Storage media as in claim 13, wherein step (a) additionally comprises the following substep:
(a.2) providing an option to print by using an internet service provider (107) to send to a computing system (111) connected to a printer (116), the reference to the location outside the portable device (100).

19. Storage media for storing software, the software, when executed on a portable device (100) performing a method for printing, the method comprising the following steps:
(a) upon a selection to print, displaying available printing options (121), including the following substep:
(a.1) providing an option (123) to use a template to provide standardized formatting to data to be printed; and,
(b) upon selection of one of the available printing options (121), performing a print operation in accordance with the selection.

20. Storage media as in claim 19, wherein step (a) additionally comprises the following substep:
(a.2) upon selection of the option (123) to use a template to provide standardized formatting to data to be printed, displaying a list of available templates (131);
wherein, upon selection of one from the list of available templates (131), the selected template is used in step (b) in performance of the print operation.

21. Storage media as in claim 19, wherein step (a) additionally comprises the following substep:
(a.2) providing an option to print when the portable device (100) is synchronized with a computing system (113).

22. Storage media for storing software, the software, when executed on a portable device (100) performing a method for printing, the method comprising the following steps:
(a) upon a selection to print, displaying available printing options (121), including the following substep:
(a.1) providing an option to print when the portable device (100) is synchronized with a computing system (113); and,
(b) upon selection of one of the available printing options (121), performing a print operation in accordance with the selection.

23. A portable device (100) comprising:
a display (101); and,
a printing control entity (141-147) within the portable device (100), the printing control entity (141-147) upon recognition of a print selection, displaying available printing options (121), providing on the display (101) an option to print remote data accessible at a location outside of the portable device (100) by reference to the location outside of the portable device (100), and upon selection of one of the available printing options (121), performing a print operation in accordance with the selection.

24. A portable device (100) as in claim 23 additionally comprising a print button (103) which is pressed by a user to make the print selection.

25. A portable device (100) comprising:
a display (101); and,
a printing control entity (141-147) within the portable device (100), the printing control entity (141-147) upon recognition of a print selection, displaying available printing options (121), providing an option (123) to use a template to provide standardized formatting to data to be printed, and upon selection of one of the available printing options (121), performing a print operation in accordance with the selection.

26. A portable device (100) as in claim 25 wherein the printing control entity (141-147) additionally, upon selection of the option (123) to use a template to provide standardized formatting to data to be printed, displays a list of available templates (131), wherein, upon selection of one from the list of available templates (131), the selected template is used in performance of the print operation.

27. A portable device (100) comprising:
a display (101); and,
a printing control entity (141-147) within the portable device (100), the printing control entity (141-147) upon recognition of a print selection, displaying available printing options (121), providing an option to print when the portable device (100) is synchronized with a computing system (113), and upon selection of one of the available printing options (121), performing a print operation in accordance with the selection.
